# EUROPÄISCHE PATENTANMELDUNG

(11) **EP 3 928 916 A1**
(43) Veröffentlichungstag der Anmeldung: **29.12.2021**
(21) Anmeldenummer: 21180097.4
(22) Anmeldetag: 17.06.2021
(51) Int. Cl.: B23K 35/02, B23K 35/30, B23K 35/40, C22C 9/02

(54) **FÜLLDRAHT FÜR EIN SCHWEISSVERFAHREN, SCHWEISSVERFAHREN UNTER EINSATZ DES FÜLLDRAHTS UND VERFAHREN ZUM HERSTELLEN DES FÜLLDRAHTS**

(30) Priorität: 19.06.2020 DE 102020116198
(71) Anmelder: RENK GmbH, 86159 Augsburg (DE)
(72) Erfinder: Barth, Steffen, 30916 Isernhagen (DE); Limmer, Martin, 31157 Sarstedt (DE)
(74) Vertreter: Wallinger Ricker Schlotter Tostmann

(57) **Zusammenfassung**

Fülldraht (10) für ein Schweißverfahren, mit einem rohrartigen Drahtmantel (11), mit einem Drahtkern (12) aus Füllpulver, der von dem rohrartigen Drahtmantel (11) umgeben ist, wobei der Drahtmantel (11) und der Drahtkern (12) eine Zusammensetzung aufweisen, dass sich beim Schweißen eine Schmelze aus CuSn12Ni2 ergibt.

## Beschreibung

Die Erfindung betrifft einen Fülldraht für ein Schweißverfahren. Ferner betrifft die Erfindung ein Schweißverfahren unter Einsatz des Fülldrahts und ein Verfahren zum Herstellen des Fülldrahts.

Bei aus der Praxis bekannten Schweißverfahren wird ein Schweißdraht verwendet, der entweder als sogenannter Volldraht oder als sogenannter Fülldraht ausgeführt sein kann. So ist zum Beispiel aus der DE 10 2006 048 028 B3 ein Fülldraht für ein Schweißverfahren sowie ein Verfahren und eine Vorrichtung zur Herstellung des Fülldrahts bekannt.

Bislang bereitet es Schwierigkeiten, über ein Schweißverfahren Funktionsschichten aus CuSn12Ni2 zu reparieren oder aufzubauen oder bestehende Vollmaterialbauteile oder Maschinenelemente aus CuSn12Ni2 zu reparieren oder aufzubauen. Dies liegt darin begründet, dass bislang kein geeigneter Schweißdraht bekannt ist.

Hiervon ausgehend liegt der vorliegenden Erfindung die Aufgabe zugrunde, einen neuartigen Fülldraht für ein Schweißverfahren, ein Schweißverfahren unter Einsatz des Fülldrahts und ein Verfahren zum Herstellen des Fülldrahts zu schaffen.

Diese Aufgabe wird durch einen Fülldraht nach Anspruch 1 gelöst. Der Fülldraht weist einen rohrartigen Drahtmantel und einen Drahtkern aus Füllpulver auf, der von dem rohrartigen Drahtmantel umgeben ist, wobei der Drahtmantel und der Drahtkern eine Zusammensetzung aufweisen, sodass sich beim Schweißen eine Schmelze aus CuSn12Ni2 ergibt.

Mit der hier vorliegenden Erfindung wird ein Fülldraht für ein Schweißverfahren vorgeschlagen, wobei der Drahtmantel und der Drahtkern eine Zusammensetzung aufweisen, sodass sich beim Schweißen eine Schmelze aus einer CuSn12Ni2 Legierung ergibt. Hiermit können Funktionsschichten aus einer CuSn12Ni2 Legierung mithilfe eines Schweißverfahrens sowohl repariert als auch aufgebaut werden, und zwar auf allen bekannten Grundwerkstoffen, insbesondere auf Grundwerkstoffen aus C10, C15, 16MnCr5, 42CrMo4, S355, GJL-300, GJS-400 und dergleichen.

Nach einer Weiterbildung der Erfindung weist der rohrartige Drahtmantel folgende Zusammensetzung auf: Cu in einem Anteil von mindestens 95 Masse-%, im Rest als Spurenelemente S und/oder Fe und/oder Si und/oder Pb und/oder Zn und/oder Sb und/oder AI und/oder O und/oder Mn und/oder Ag und/oder Bi.

Der Drahtkern und damit das Füllpulver weist vorzugsweise folgende Zusammensetzung auf: Cu in einem Anteil von 50 bis 80 Masse-%, Sn in einem Anteil von 19, 99 bis 40 Masse-%, Ni in einem Anteil von 0,01 bis 10 Masse-%.

Ein Manteldraht sowie ein Mantelkern mit den oben definierten Zusammensetzungen sind besonders bevorzugt, um beim Schweißen eine Schmelze aus CuSn12Ni2 bereitzustellen und so Funktionsschichten aus CuSn12Ni2 bzw. einer CuSn12Ni2 Legierung zu reparieren oder aufzubauen oder ein Vollmaterialbauteil als Maschinenelement zu reparieren oder aufzubauen.

Nach einer Weiterbildung der Erfindung weist der rohrartige Drahtmantel einen Außendurchmesser von 0,8 bis 2 mm und eine Dicke von 0,05 bis 0,7 mm auf. Das Füllpulver des Drahtkerns weist vorzugsweise eine Korngröße von bis zu 250 µm, vorzugsweise zwischen 0,01 und 250 µm, auf. Ein derartiger Fülldraht ist für ein Schweißen besonders geeignet und daher bevorzugt.

Vorzugsweise beträgt der Anteil des Drahtmantels am Fülldraht 60±20 Masse-% und der der Anteil des Drahtkerns am Fülldraht 40±20 Masse-%. Diese Verhältnisse von Drahtmantel und Drahtkern sind beim Schweißen besonders bevorzugt.

Das Schweißverfahren unter Einsatz des Fülldrahts ist in Anspruch 11 und das Verfahren zum Herstellen des Fülldrahts ist in Anspruch 12 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

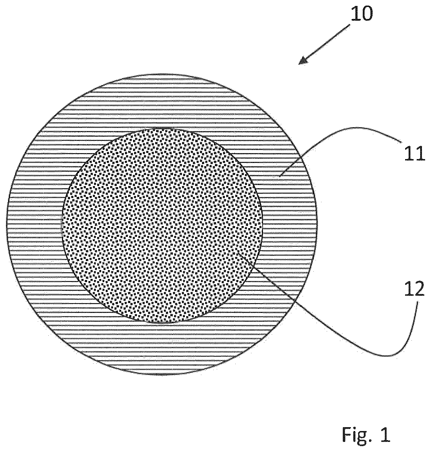

- Fig. 1: einen Querschnitt durch einen erfindungsgemäßen Fülldraht.

Die Erfindung betrifft das Reparieren oder das Aufbauen einer Funktionsschicht oder Reparieren oder das Aufbauen eines Vollmaterialbauteils als Maschinenelement aus einer CuSn12Ni2-Legierung mithilfe eines Schweißverfahrens, und zwar einen Fülldraht für ein solches Schweißverfahren, ein Schweißverfahren unter Einsatz des Fülldrahts sowie ein Verfahren zum Herstellen des Fülldrahts.

Fig. 1 zeigt schematisiert einen Querschnitt durch einen Fülldraht 10 für ein Schweißverfahren, wobei der Fülldraht 10 einen rohrartigen Drahtmantel 11 und einen Drahtkern 12 aus Füllpulver aufweist.

Der Drahtkern 12 aus Füllpulver ist von dem rohrartigen Drahtmantel 11 umgeben.

Der Drahtmantel 11 und der Drahtkern 12 des Fülldrahts 10 weisen eine Zusammensetzung auf, sodass sich beim Schweißen eine Schmelze aus CuSn12Ni2 bzw. einer CuSn12Ni2 Legierung ergibt.

Hiermit können Funktionsschichten aus einer CuSn12Ni2 Legierung vorteilhaft repariert und aufgebaut werden, und zwar auf allen möglichen Grundwerkstoffen.

Der rohrartige Drahtmantel 11 weist vorzugsweise folgende Zusammensetzung auf:
Cu in einem Anteil von mindestens 95 Masse-%,
im Rest als Spurenelement S und/oder Fe und/oder Si und/oder Pb und/oder Zn und/oder Sb und/oder AI und/oder O und/oder Mn und/oder Ag und/oder Bi.

Vorzugsweise beträgt der Anteil an Cu am rohrartigen Drahtmantel 11 mindestens 96 Masse-%, bevorzugt mindestens 97 Masse-%, besonders bevorzugt mindestens 99 Masse-% oder gar mindestens 99,8 Masse-%.

Der Anteil des jeweiligen Spurenelements am Drahtmantel 11, welches ein Legierungselement darstellt, beträgt jeweils maximal 2 Masse-%, vorzugsweise jeweils maximal 1 Masse-%, bevorzugt jeweils maximal 0,5 Masse-%, besonders bevorzugt jeweils maximal 0,1 Masse-%.

Die Summe aus Cu und dem oder jedem Spurenelement beträgt selbstverständlich in Summe 100 Masse-% des Drahtmantels 11. Wenn also der Drahtmantel 11 97 Masse-% Cu aufweist, beträgt die Summe aller Spurenelemente 3 Masse-%. Wenn der Drahtmantel 11 99 Masse-% Cu aufweist, beträgt die Summe aller Spurenelemente 1 Masse-%. Wenn der Drahtmantel 11 99,8 Masse-% Cu aufweist, beträgt die Summe aller Spurenelemente 0,2 Masse-%.

Masse-% (m-%) wird auch als Gewichts-% (Gew.-%) bezeichnet.

Der rohrartige Drahtmantel 11 weist einen Außendurchmesser von 0,8 mm bis 2 mm und eine Dicke von 0,05 mm bis 0,7 mm auf.

Bevorzugt weist der rohrartige Drahtmantel 11 einen Außendurchmesser von 1,2 mm bis 1,6 mm und eine Dicke von 0,1 mm bis 0,4 mm auf.

Die Dicke und der Außendurchmesser des Drahtmantels 11 sind dabei vorzugsweise derart gewählt, dass der Anteil des Drahtmantels 11 am Fülldraht 10 60±20 Masse-% beträgt. Demnach beträgt der Anteil des Drahtkerns 12 am Fülldraht 10 40±20 Masse-%.

Der Drahtkern 12 des Fülldrahts 10 aus dem Füllpulver und damit das Füllpulver weist folgende Zusammensetzung auf:
Cu in einem Anteil von 50 Masse-% bis 80 Masse-%,
Sn in einem Anteil von 19,99 Masse-% bis 40 Masse-%,
Ni in einem Anteil von 0,01 Masse-% bis 10 Masse-%.

Vorzugsweise weist das Füllpulver folgende Zusammensetzung auf:
Cu in einem Anteil von 60 Masse-% bis 73 Masse-%,
Sn in einem Anteil von 25 Masse-% bis 32 Masse-%,
Ni in einem Anteil von 2 Masse-% bis 8 Masse-%.

Das Füllpulver des Drahtkerns 12 kann zusätzlich zu Cu, Sn und Ni als Spurenelement oder Legierungselement S und/oder Fe und/oder Si und/oder Pb und/oder Zn und/oder Sb und/oder Al und/oder O und/oder Mn und/oder Ag und/oder Bi aufweisen.

Der Anteil jedes der Spurenelemente im Füllpulver des Drahtkerns 12 beträgt jeweils maximal 2 Masse-%, vorzugsweise jeweils maximal 1 Masse-%, bevorzugt maximal 0,5 Masse-%, besonders bevorzugt maximal 0,1 Masse-%.

Im Füllpulver des Drahtkerns 12 beträgt die Summe aus Cu, Sn, Ni 100 Masse-%, die Masseanteile der ggf. vorhanden Spurenelemente ist als Superaddition zu Cu, Sn und Ni zu verstehen.

Vorzugsweise beträgt die Summe aller vorhanden Spurenelemente im Füllpulver als Superaddition zu Cu, Sn und Ni maximal 5 Masse-%, bevorzugt maximal 3 Masse-%, besonders maximal bevorzugt 2 Masse-% oder gar maximal 1 Masse-%.

Bei dem Füllpulver des Drahtkerns 12 handelt es sich vorzugsweise um idealsphärisches Füllpulver welches beim Aufschmelzen keine Klumpen bildet. Die Pulverpartikel des Füllpulvers sind massiv und weisen vorzugsweise keine Hohlräume auf.

Eine Korngröße des Füllpulvers des Drahtkerns 12 beträgt bis zu 250 µm, wobei das Füllpulver des Drahtkerns 12 Pulverkörner mit unterschiedlichen Korngrößen zwischen 0,01 µm und 250 µm aufweisen kann. In diesem Korngrößenbereich kann das Füllpulver eine Korngrößenverteilung aufweisen.

Das Füllpulver des Drahtkerns 12 des Fülldrahts 10 ist vorzugsweise eine Vorlegierung aus den oben genannten Elementen, die zum Beispiel durch Gasverdüsung hergestellt ist.

Der Fülldraht 10 ist vorzugsweise auf einer Spule aufgewickelt und kann beim Schweißen von der Spule abgewickelt werden.

In einem konkreten Ausführungsbeispiel eines Fülldrahts 10 gilt:

| | |
|---|---|
| Außendurchmesser des Drahtmantels: | 1,2 oder 1,6 mm |
| Dicke des Drahtmantels: | 0,1 oder 0,3 mm |
| Cu-Anteil des Drahtmantels: | 99,8 Masse-% |

Im Rest in Summe 0,2 Masse-% Spurenelemente des Drahtmantels

| | |
|---|---|
| Cu-Anteil des Füllpulvers: | 65 Masse-% |
| Sn-Anteil des Füllpulvers: | 30 Masse-% |
| Ni-Anteil des Füllpulvers: | 5 Masse-% |

Als Superaddition in Summe maximal 2,5 Masse-% Spurenelemente des Füllpulvers.

In dem konkreten Ausführungsbeispiel des Fülldrahts weist das Füllpulver des Drahtkerns 12 eine Korngröße zwischen 0,01 und 250 µm auf.

Die Korngrößenverteilung ist vorzugsweise wie folgt:
10% der Pulverpartikel mit einer Korngröße zwischen 0,01 und 44,99 µm
85% der Pulverpartikel mit einer Korngröße zwischen 45 und 200 µm
5% der Pulverpartikel mit einer Korngröße zwischen 200,01 und 250 µm

Die Erfindung betrifft weiterhin ein Schweißverfahren unter Einsatz des oben beschriebenen Fülldrahts, und zwar zur Reparatur oder zum Aufbau einer Funktionsschicht aus einer CuSn12Ni2 Legierung oder zum Reparieren oder Aufbauen eines Vollmaterialbauteils als Maschinenelement aus einer CuSn12Ni2 Legierung.

Funktionsschichten können einlagig oder mehrlagig aufgebaut werden mit einer Dicke zwischen vorzugsweise 0,05 mm und 15 mm.

Als Schweißverfahren kommt dabei ein MIG-Schweißverfahren oder MAG-Schweißverfahren zum Einsatz.

Insbesondere handelt es sich bei der aufzubauenden oder zu reparierenden Funktionsschicht um eine tribologische Funktionsschicht, zum Beispiel eine Gleitlagerschicht eines Gleitlagers aus den Bereichen der Antriebstechnik, wie z.B. Windkraft (Offshore / Onshore), Energiesektor, Automobilsektor, Getriebetechnik oder aber um Maschinenelemente aus dem Bereich der Dichtungstechnik oder dergleichen. Ferner kann es sich um ein Maschinenbauteil als Vollmaterial-Maschinenelement aus oben genannten Anwendungs-feldern handeln, welches aus dem genannten Material komplett aufgebaut bzw. repariert wird.

Ferner betrifft die Erfindung ein Verfahren zum Herstellen des oben beschriebenen Fülldrahts 10. Hierbei wird zunächst ein Metallblech für den Drahtmantel 11 bereitgestellt, der die oben angegebene Zusammensetzung aufweist. Die Dicke des Metallblechs beträgt dabei vorzugsweise zwischen 0,05 mm und 0,7 mm. Von dem Metallblech wird ein Zuschnitt für den Drahtmantel 11 abgetrennt. Ferner wird das Füllpulver für den Drahtkern 12 bereitgestellt, bei welchem es sich insbesondere um ein Füllpulver mit einer definierten Korngrößenverteilung handelt, wobei die Pulverpartikel die oben angegebene Zusammensetzung aufweisen und vorzugsweise einer Vorlegierung bestehen, die zum Beispiel durch Gasverdüsung hergestellt ist.

Nach dem Abtrennen des Zuschnitts für den Drahtmantel 11 wird der Zuschnitt für den Drahtmantel 11 zum Drahtmantel 11 geformt, wobei ein Hohlraum des Drahtmantels 11 mit dem Füllpulver gefüllt wird, und zwar beim und/oder nach dem Formen des Zuschnitts für den Drahtmantel 11. Hierbei wird dann der Drahtkern 12 aus dem Füllpulver ausgebildet. Aneinanderstoßende Kanten des Metallblechs können nach dem Formen des Zuschnitts zum Drahtmantel 11 zum Drahtmantel 11 über eine Falznaht oder Schweißnaht verbunden werden. Das Füllpulver des Drahtkerns 12 wird im Drahtmantel 11 über Kraftschluss gehalten.

### Bezugszeichenliste

- 10: Fülldraht
- 11: Drahtmantel
- 12: Drahtkern

## Patentansprüche

1. Fülldraht (10) für ein Schweißverfahren,
mit einem rohrartigen Drahtmantel (11),
mit einem Drahtkern (12) aus Füllpulver, der von dem rohrartigen Drahtmantel (11) umgeben ist,
wobei der Drahtmantel (11) und der Drahtkern (12) eine Zusammensetzung aufweisen, dass sich beim Schweißen eine Schmelze aus CuSn12Ni2 ergibt.

2. Fülldraht (10) nach Anspruch 1, wobei
der Drahtmantel (11) folgende Zusammensetzung aufweist:
Cu in einem Anteil von mindestens 95 Masse-%,
im Rest als Spurenelement S und/oder Fe und/oder Si und/oder Pb und/oder Zn und/oder Sb und/oder Al und/oder O und/oder Mn und/oder Ag und/oder Bi.

3. Fülldraht (10) nach Anspruch 2, wobei
der Anteil des jeweiligen Spurenelements am Drahtmantel (11) jeweils maximal 2 Masse-%, vorzugsweise jeweils maximal 1 Masse-%, beträgt.

4. Fülldraht (10) nach Anspruch 2 oder 3, wobei
der Drahtmantel (11) Cu in einem Anteil von mindestens 96 Masse-%, bevorzugt von mindestens 97 Masse-%, besonders bevorzugt von mindestens 99 Masse-%, aufweist.

5. Fülldraht (10) nach einem der Ansprüche 1 bis 4, wobei
der Drahtmantel (11) einen Außendurchmesser von 0,8 bis 2 mm und eine Dicke von 0,05 bis 0,7 mm aufweist.

6. Fülldraht (10) nach einem der Ansprüche 1 bis 5, wobei
der Drahtkern (12) und damit das Füllpulver folgende Zusammensetzung aufweist:
Cu in einem Anteil von 50 bis 80 Masse-%,
Sn in einem Anteil von 19,99 bis 40 Masse-%,
Ni in einem Anteil von 0,01 bis 10 Masse-%.

7. Fülldraht (10) nach einem der Ansprüche 1 bis 6, wobei
der Drahtkern (12) und damit das Füllpulver folgende Zusammensetzung aufweist:
Cu in einem Anteil von 60 bis 73 Masse-%,
Sn in einem Anteil von 25 bis 32 Masse-%,
Ni in einem Anteil von 2 bis 8 Masse-%.

8. Fülldraht (10) nach Anspruch 6 oder 7, wobei
das Füllpulver des Drahtkerns (12) als Spurenelement S und/oder Fe und/oder Si und/oder Pb und/oder Zn und/oder Sb und/oder Al und/oder O und/oder Mn und/oder Ag und/oder Bi aufweist,
der Anteil des jeweiligen Spurenelements am Füllpulver des Drahtkerns (12) als Superaddition jeweils maximal 2 Masse-%, vorzugsweise jeweils maximal 1 Masse-%, beträgt.

9. Fülldraht (10) nach einem der Ansprüche 1 bis 8, wobei
das Füllpulver des Drahtkerns (12) eine Korngröße von bis zu 250 µm aufweist.

10. Fülldraht (10) nach einem der Ansprüche 1 bis 9, wobei
der Anteil des Drahtmantels (11) am Fülldraht (10) 60±20 Masse-% beiträgt.
der Anteil des Drahtkerns (12) am Fülldraht (10) 40±20 Masse-% beiträgt.

11. Schweißverfahren unter Einsatz des Fülldrahts (10) nach einem der Ansprüche 1 bis 10, wobei
das Schweißverfahren ein MIG-Schweißverfahren oder MAG-Schweißverfahren zur Reparatur oder zum Aufbau einer Funktionsschicht oder zum Aufbau eines Vollmaterialbauteils als Maschinenelement aus einer CuSn12Ni2 Legierung ist.

12. Verfahren zum Herstellen eines Fülldrahts (10) nach einem der Ansprüche 1 bis 10, mit folgenden Schritten:
Bereitstellen eines Metallblechs für den Drahtmantel (11),
Abtrennen eines Zuschnitts für den Drahtmantel (11),
Bereitstellen des Füllpulvers für den Drahtkern (12),
Formen des Zuschnitts für den Drahtmantel zum Drahtmantel (11) und Füllen eines Hohlraums des Drahtmantels (11) mit dem Füllpulver beim und/oder nach dem Formen des Zuschnitts für den Drahtmantel zum Drahtmantel unter Ausbildung des Drahtkerns (12).
